# EUROPÄISCHE PATENTSCHRIFT

(11) **EP 3 435 194 B1**
(45) Veröffentlichungstag und Bekanntmachung des Hinweises auf die Patenterteilung: **12.10.2022**
(21) Anmeldenummer: 18184866.4
(22) Anmeldetag: 20.07.2018
(51) Int. Cl.: B60K 26/02, B60R 21/09, B60T 7/06, G05G 1/327, B60K 23/00

(54) **PEDALVORRICHTUNG FÜR EIN FAHRZEUG**
PEDAL DEVICE FOR A VEHICLE
DISPOSITIF FORMANT PÉDALE POUR UN VÉHICULE

(30) Priorität: 26.07.2017 DE 102017116908
(43) Veröffentlichungstag der Anmeldung: 30.01.2019
(73) Patentinhaber: BOGE Elastmetall GmbH, 49401 Damme (DE)
(72) Erfinder: TIEMANN, Burkhard, 49152 Bad Essen (DE); WAGENER, Keit, 49143 Bissendorf (DE); KRÜGER, Martin Robert, 49451 Holdorf (DE)
(74) Vertreter: Bossmeyer, Jörg Peter

(56) Entgegenhaltungen:
- EP-A1- 2 939 888
- DE-C2- 10 064 770

## Beschreibung

Die Erfindung betrifft eine Pedalvorrichtung für ein Fahrzeug, mit einem Lagerbock, einem Pedalhebel, der mittels eines Lagerelements um eine Pedalschwenkachse schwenkbar an dem Lagerbock gelagert ist, einem Trennelement, mittels welchem das Lagerelement abscherbar ist, und einer Auffangvorrichtung, mittels welcher der Pedalhebel bei abgeschertem Lagerelement auffangbar und um eine Hilfsschwenkachse schwenkbar lagerbar ist.

Die EP 2 939 888 A1 offenbart einen Fahrzeugpedalsatz, umfassend einen Träger mit zwei Seitenwänden, die so miteinander verbunden sind, dass eine Öffnung zwischen ihnen frei bleibt, ein Pedal, das sich durch die Öffnung bewegt und mittels einer Welle drehbar am Träger angebracht ist, deren Enden am Träger befestigt sind, und eine Rückholfeder, die auf das Pedal wirkt. Der Pedalsatz umfasst außerdem einen Hebel, der ebenfalls drehbar an der Welle angebracht ist und eine Querstange sowie zwei an deren Enden befestigte Arme umfasst, wobei die Arme jeweils mit einer Öffnung, in welche jeweils ein Ende der Welle eingeführt ist, und mit zumindest zwei zusätzlichen Öffnungen versehen sind. Der Träger weist an jeder Seitenwand einen horizontalen Spalt auf, der mit den Enden der Welle derart zusammenwirkt, dass innerhalb der Spaltbreite jedes horizontalen Spalts eines der Enden der Welle aufgenommen ist. Ferner sind Platten durch zumindest zwei Stifte am Träger befestigt, die an korrespondierenden Fenstern die Seitenwand des Trägers durchqueren und in die zusätzlichen Öffnungen des Hebels eingeführt sind. Die Platten, die an den vorderen Enden der Spalte angeordnet sind, weisen eine Seitenstützfläche auf, auf der die Welle aufliegt. Zwischen dem Träger und jeder Platte ist eine Auswerferfeder vorgesehen, die Druck zwischen dem Träger und jeder Platte ausübt.

Aus der DE 100 64 770 C2 ist eine Pedalvorrichtung für ein Fahrzeug bekannt, die einen Lagerbock, einen Pedalhebel, der mittels eines Lagerelements um eine Pedalschwenkachse schwenkbar an dem Lagerbock gelagert ist, und ein Trennelement aufweist, mittels welchem das Lagerelement abscherbar ist. Diese Pedalvorrichtung verfolgt den Zweck, Unfallverletzungen zu vermeiden, die durch ein Eindringen des Pedalhebels in die Fahrgastzelle verursacht werden können. Die vorgenannte Vorrichtung verhindert dieses Eindringen durch die Zerstörung des Lagerelements im Falle einer Fahrzeugkollision. Diese Zerstörung wird durch das Trennelement erreicht, das durch einen Aufprall auf ein Fahrzeugbauteil, wie z.B. ein Querträger, aktiviert wird und das Lagerelement abschert.

Nachteilig an der vorgenannten Lösung ist, dass die Pedalfunktion nach dem Abscheren des Lagerelements nicht mehr gegeben ist. Insbesondere befindet sich der Pedalhebel nach dem Abscheren des Lagerelements in einer undefinierten Lage im Fußraum, sodass eine Kraftübertragung auf eine Funktionskomponente, wie z.B. einen Bremskraftzylinder oder einen Kupplungsgeberzylinder, nicht mehr möglich ist.

Ausgehend hiervon liegt der Erfindung die Aufgabe zugrunde, die eingangs genannte Pedalvorrichtung derart weiterzubilden, dass deren Funktionsfähigkeit auch nach einem Unfall zumindest eingeschränkt gegeben ist.

Diese Aufgabe wird erfindungsgemäß durch eine Pedalvorrichtung nach Anspruch 1 gelöst. Bevorzugte Weiterbildungen der Erfindung sind in den Unteransprüchen und in der nachfolgenden Beschreibung gegeben.

Die erfindungsgemäße Pedalvorrichtung für ein Fahrzeug, insbesondere Kraftfahrzeug, weist einen Lagerbock, einen Pedalhebel, der mittels eines Lagerelements um eine Pedalschwenkachse schwenkbar an dem Lagerbock gelagert ist, ein Trennelement, mittels welchem, insbesondere infolge einer durch eine, vorzugsweise äußere, Kraft oder Krafteinwirkung bewirkten oder herbeigeführten Relativbewegung zwischen dem Trennelement und dem Lagerelement, vorzugsweise aufeinander zu, das Lagerelement abscherbar ist, und eine Auffangvorrichtung auf, mittels welcher der Pedalhebel bei abgeschertem Lagerelement auffangbar und um eine Hilfsschwenkachse schwenkbar lagerbar ist.

Durch die Auffangvorrichtung ist es möglich, den Pedalhebel auch nach dem Abscheren des Lagerelements schwenkbar betätigen und somit die Funktion des Pedalhebels sicherstellen zu können.

Das Abscheren des Lagerelements führt insbesondere zu einer Verschiebung und/oder zu einem Versatz und/oder zu einem Verschwenken des Pedalhebels, vorzugsweise relativ zu dem Lagerbock. Bevorzugt ist der Pedalhebel bei abgeschertem Lagerelement mittels der Auffangvorrichtung, vorzugsweise relativ zu dem Lagerbock, in eine definierte und/oder vorgegebene Lage führbar und/oder überführbar. Vorteilhaft ist der Pedalhebel bei abgeschertem Lagerelement mittels der Auffangvorrichtung, vorzugsweise relativ zu dem Lagerbock, in der oder einer definierten und/oder vorgegebenen Lage fixierbar und/oder lagerbar. Vorzugsweise ist der Pedalhebel bei abgeschertem Lagerelement mittels der Auffangvorrichtung, insbesondere unmittelbar oder mittelbar oder zumindest mittelbar, an dem Lagerbock um die Hilfsschwenkachse schwenkbar lagerbar.

Durch die oder eine Kraft oder Krafteinwirkung ist oder wird insbesondere die oder eine Relativbewegung zwischen dem Trennelement und dem Lagerelement, vorzugsweise aufeinander zu, bewirkbar oder herbeiführbar oder bewirkt oder herbeigeführt, sodass das Lagerelement mittels des Trennelements abscherbar ist oder abgeschert wird. Das Trennelement steht beispielsweise mit dem Lagerelement in Kontakt oder ist z.B. durch die oder eine Relativbewegung mit dem Lagerelement in Kontakt bringbar. Die Kraft oder Krafteinwirkung ist insbesondere eine äußere und/oder aufprallbedingte und/oder unfallbedingte Kraft oder Krafteinwirkung.

Bevorzugt ist das Trennelement, insbesondere über eine Stützfläche, gegen ein Fahrzeugbauteil abgestützt oder abstützbar. Weist das Trennelement zu dem Fahrzeugbauteil einen Abstand auf, ist oder wird durch die Kraft oder Krafteinwirkung insbesondere eine Verlagerung des Trennelements oder der Pedalvorrichtung mit dem Trennelement relativ zu dem Fahrzeugbauteil, vorzugsweise unter Verringerung des Abstands zwischen dem Trennelement und dem Fahrzeugbauteil, bewirkbar oder herbeiführbar oder bewirkt oder herbeigeführt, sodass das Trennelement mit dem Fahrzeugbauteil in Kontakt bringbar ist oder gebracht wird. Somit ist oder wird das Trennelement insbesondere an dem Fahrzeugbauteil abstützbar oder abgestützt. Bei der Stützfläche handelt es sich bevorzugt um eine Stützfläche des Trennelements. Insbesondere ist die Stützfläche an einem freien und/oder dem Lagerbock abgewandten Ende des Trennelements vorgesehen. Vorteilhaft ist das Trennelement mit einem dem Lagerbock abgewandten Bereich oder Endbereich gegen das Fahrzeugbauteil abgestützt oder abstützbar.

Die Kraft oder Krafteinwirkung ist oder wird insbesondere durch einen Aufprall des Fahrzeugs auf ein Hindernis bewirkbar oder herbeiführbar oder bewirkt oder herbeigeführt. Dies kann z.B. dadurch geschehen, dass der Lagerbock und das Fahrzeugbauteil aufgrund einer aufprallbedingten Verformung des Fahrzeugs aufeinander zu bewegt werden. Ergänzend oder alternativ ist oder wird die Kraft oder Krafteinwirkung z.B. durch einen Aktor bewirkbar oder herbeiführbar oder bewirkt oder herbeigeführt. Beispielsweise ist eine mit dem oder einem Aktor verbundene Aktorsteuerung mit einem oder wenigstens einem Aufprallsensor vorgesehen, mittels welchem insbesondere ein Aufprall des Fahrzeugs auf ein Hindernis erfassbar ist. Bevorzugt ist der Aktor mittels der Aktorsteuerung steuerbar oder ansteuerbar. Wird z.B. mittels des oder des wenigstens einen Aufprallsensors ein Aufprall des Fahrzeugs auf ein Hindernis erfasst, steuert die Aktorsteuerung insbesondere den Aktor zum Bewirken oder Herbeiführen der Kraft oder Krafteinwirkung an. Der Aktor ist bevorzugt ein pyrotechnischer Aktor. Beispielsweise umfasst der Aktor eine Treibladung oder ist durch eine Treibladung gebildet. Alternativ kann der Aktor z.B. ein elektrischer, ein elektromagnetischer, ein pneumatischer oder ein hydraulischer Aktor sein. Vorteilhaft kann der Aktor, insbesondere unmittelbar, auf das Trennelement einwirken und/oder an das Trennelement angreifen, insbesondere von einer dem Lagerbock abgewandten Seite des Trennelements her. Bevorzugt ist der Aktor auf einer dem Lagerbock abgewandten Seite des Trennelements angeordnet. Beispielsweise ist der Aktor, vorzugsweise unmittelbar oder mittelbar, mit dem Lagerbock verbunden.

Bevorzugt ist das Trennelement, insbesondere bereichsweise oder zumindest bereichsweise, keilförmig ausgebildet. Das Trennelement wird z.B. auch als Trennkeil oder Scherkeil oder Scherelement bezeichnet. Beispielsweise ist das Trennelement relativ zu dem Lagerbock und/oder zu dem Lagerelement bewegbar. Bevorzugt ist diese Beweglichkeit des Trennelements im bestimmungsgemäßen Betrieb der Pedalvorrichtung aber eingeschränkt oder unterbunden, sodass insbesondere keine störenden Geräusche entstehen.

Die Hilfsschwenkachse verläuft bevorzugt im Abstand zu der Pedalschwenkachse und/oder ist im Abstand zu der Pedalschwenkachse vorgesehen und/oder ist gegenüber der Pedalschwenkachse versetzt. Der Abstand zwischen der Pedalschwenkachse und der Hilfsschwenkachse ermöglicht insbesondere einen Versatz und/oder eine Verschiebung und/oder eine Verlagerung des Pedalhebels nach dem Abscheren des Lagerelements. Dies ist vorteilhaft, da der Pedalhebel durch das Abscheren oder infolge des Abscherens insbesondere versetzt wird oder werden soll. Bevorzugt wird der Pedalhebel durch das Abscheren oder infolge des Abscherens, insbesondere mit seinem dem Lagerelement und/oder dem Lagerbock abgewandten freien Ende, von dem oder einem Fahrer weg geschwenkt oder geführt. Dies dient insbesondere zur Vermeidung von Verletzungen des Fahrers. Vorteilhaft verläuft die Hilfsschwenkachse parallel zu der Pedalschwenkachse. Somit ist der Pedalhebel um die Hilfsschwenkachse in ähnlicher Weise schwenkbar wie um die Pedalschwenkachse.

Das Trennelement ist bevorzugt zwischen dem Lagerelement und einem an dem Lagerbock vorgesehenen Widerlager angeordnet und/oder aufgenommenen und/oder geführt. Ergänzend oder alternativ ist das Trennelement beispielswiese, vorzugsweise verschiebbar, an dem Lagerbock geführt. Insbesondere ist oder wird die äußere Krafteinwirkung durch einen Unfall verursacht oder verursachbar.

Vorteilhaft ist das Lagerelement mittels des Trennelements unter Aufbringung einer Scherkraft abscherbar.

Erfindungsgemäß weist die Auffangvorrichtung, insbesondere zwei, Hilfslageraufnahmen auf, von welchen bei abgeschertem Lagerelement, insbesondere zwei, von dem Pedalhebel abstehende Lagerelement-Stummel des abgescherten Lagerelements aufnehmbar sind. Dabei ist, insbesondere bei abgeschertem Lagerelement, der Pedalhebel mittels der Lagerelement-Stummel um die Hilfsschwenkachse schwenkbar in und/oder an den Hilfslageraufnahmen gelagert oder lagerbar. Vorteilhaft erstrecken sich die Lagerelement-Stummel beidseits des Pedalhebels von diesem weg. Die Hilfslageraufnahmen weisen zu dem Lagerelement und/oder zu der Pedalschwenkachse insbesondere einen Abstand auf. Bevorzugt weisen die Hilfslageraufnahmen zueinander einen Abstand auf. Beispielsweise ist der Pedalhebel in diesem Abstand angeordnet. Insbesondere ist der Pedalhebel in diesem oder diesen Abstand, vorzugsweise bei abgeschertem Lagerelement und/oder infolge der oder einer Relativbewegung zwischen dem Trennelement und dem Lagerelement, angeordnet oder anordenbar.

Gemäß einer Weiterbildung sind die Hilfslageraufnahmen an dem Lagerbock oder an dem Trennelement vorgesehen. Beispielsweise sind die Hilfslageraufnahmen als Schalen oder Haken oder schalenförmig oder hakenförmig ausgebildet.

Insbesondere sind die Hilfslageraufnahmen zu dem Lagerelement hin und/oder an ihren dem Lagerelement zugewandten Seiten offen.

Bevorzugt sind bei abgeschertem Lagerelement die von dem Pedalhebel abstehenden Lagerelement-Stummel in die an dem Lagerbock vorgesehenen Hilfslageraufnahmen einrückbar und/oder lagerbar. Vorzugsweise ist das Lagerelement zwischen dem Trennelement und den an dem Lagerbock vorgesehenen Hilfslageraufnahmen angeordnet. Vorteilhaft sind die an dem Lagerbock vorgesehenen Hilfslageraufnahmen unter dem Lagerelement angeordnet. Somit kann ein Einrücken der Lagerelement-Stummel in die an dem Lagerbock vorgesehenen Hilfslageraufnahmen z.B. aufgrund der Schwerkraft erfolgen. Vorteilhaft umgreifen die an dem Lagerbock vorgesehenen Hilfslageraufnahmen das Lagerelement, insbesondere teilweise oder zumindest teilweise.

Bevorzugt sind, insbesondere bei abgeschertem Lagerelement, die an dem Trennelement vorgesehenen Hilfslageraufnahmen, vorzugsweise durch die oder eine Relativbewegung zwischen dem Trennelement und dem Lagerelement, über die von dem Pedalhebel abstehenden Lagerelement-Stummel führbar. Vorzugsweise sind die an dem Trennelement vorgesehenen Hilfslageraufnahmen zwischen dem Lagerelement und der Stützfläche an dem Trennelement vorgesehen. Vorteilhaft sind die an dem Trennelement vorgesehenen Hilfslageraufnahmen auf Höhe des Lagerelements angeordnet. Bevorzugt stehen die an dem Trennelement vorgesehenen Hilfslageraufnahmen von einer dem Lagerelement zugewandten Seite des Trennelements, insbesondere hakenförmig, ab und sind vorzugsweise zu dem Lagerelement hin offen. Somit können die an dem Trennelement vorgesehenen Hilfslageraufnahmen z.B. besonders einfach über die Lagerelement-Stummel geführt werden.

Nach dem Abscheren des Lagerelements ist das Trennelement vorzugsweise an dem Lagerbock fixiert und/oder relativ zu diesem ortsfest. Beispielsweise ist das Trennelement zwischen dem Lagerbock und dem Fahrzeugbauteil eingeklemmt. Bevorzugt ist das Trennelement, insbesondere infolge des Abscherens oder durch das Abscheren und/oder infolge der oder durch die Relativbewegung, an dem oder relativ zu dem Lagerbock fixierbar.

Gemäß einer nicht beanspruchten Ausgestaltung weist die Auffangvorrichtung ein fest mit dem Lagerbock verbundenes und sich in Richtung der Hilfsschwenkachse erstreckendes Hilfslagerelement und eine an dem Pedalhebel vorgesehene, insbesondere konkave, Hilfslagerkontur auf. Bevorzugt ist die Hilfslagerkontur bei abgeschertem Lagerelement, insbesondere aufgrund eines Versatzes und/oder durch einen Versatz des Pedalhebels, das Hilfslagerelement, vorzugsweise teilweise oder zumindest teilweise, umgreifend an das Hilfslagerelement anlegbar. Vorteilhaft ist das Hilfslagerelement bei abgeschertem Lagerelement, insbesondere aufgrund eines Versatzes und/oder durch einen Versatz des Pedalhebels, in die Hilfslagerkontur einrückbar. Vorzugsweise ist der Pedalhebel somit, insbesondere bei abgeschertem Lagerelement, mittels seiner Hilfslagerkontur um die Hilfsschwenkachse schwenkbar an dem Hilfslagerelement gelagert oder lagerbar. Die Hilfslagerkontur ist bevorzugt an einer dem Hilfslagerelement zugewandten Seite des Pedalhebels vorgesehen.

Gemäß einer Weiterbildung weist der Lagerbock zwei im Abstand zueinander angeordnete, vorzugsweise parallele, Wangen auf, zwischen denen sich das Lagerelement erstreckt. Bevorzugt ist das Lagerelement an den Wangen fixiert und/oder gelagert. Vorteilhaft ist der Pedalhebel, insbesondere mittig, zwischen den Wangen auf oder an dem Lagerelement angeordnet und/oder gelagert und/oder befestigt. Beispielsweise erstreckt sich das Lagerelement durch die Wangen hindurch. Das Widerlager ist vorzugsweise durch eine, insbesondere die Wangen miteinander verbindende, Wand des Lagerbocks gebildet.

Bevorzugt weist das Trennelement einen Grundkörper und zwei parallele Schenkel auf. Vorzugsweise erstrecken sich die Schenkel von dem Grundkörper weg, insbesondere in Richtung des Lagerelements und/oder des Pedalhebels. Vorteilhaft sind die Schenkel durch den Grundkörper miteinander verbunden. Bevorzugt ist der Pedalhebel zwischen den Schenkeln angeordnet. Insbesondere weisen die Schenkel Wirkflächen auf, die, vorzugsweise beidseits des Pedalhebels, an dem Lagerelement anliegen oder durch die oder eine Relativbewegung zwischen dem Trennelement und dem Lagerelement an das Lagerelement anlegbar sind. Beispielsweise sind die Wirkflächen bogenförmig und/oder keilförmig ausgebildet. Vorzugsweise sind die Schenkel zwischen den Wangen angeordnet. Insbesondere sind die Schenkel jeweils zwischen einer der Wangen und dem Pedalhebel angeordnet. Das Trennelement besteht bevorzugt aus Kunststoff oder aus Metall oder aus einer Kombination dieser Werkstoffe. Vorteilhaft ist das Trennelement zwischen dem Lagerbock und Fahrzeugbauteil, insbesondere lose oder locker, angeordnet.

Gemäß einer Weiterbildung sind die an dem Lagerbock vorgesehenen Hilfslageraufnahmen an den Wangen und/oder an den einander zugewandten Seiten der Wangen vorgesehen. Insbesondere sind die an dem Lagerbock vorgesehenen Hilfslageraufnahmen jeweils an einer der Wangen vorgesehen. Bevorzugt stehen die an dem Lagerbock vorgesehenen Hilfslageraufnahmen jeweils in Richtung des Pedalhebels von der jeweiligen Wange vor oder hervor.

Gemäß einer nicht beanspruchten Ausgestaltung erstreckt sich das Hilfslagerelement zwischen den Wangen. Bevorzugt ist das Hilfslagerelement an den Wangen fixiert und/oder gelagert.

Die Pedalvorrichtung ist bevorzugt in einer Fahrgastzelle eines Fahrzeugs angeordnet. Vorteilhaft ist der Lagerbock an einer Karosserie des oder eines Fahrzeugs befestigt. Insbesondere ist der Lagerbock an einem Bereich des Fahrzeugs oder der Karosserie befestigt, der weniger steif als das Fahrzeugbauteil ist, gegen welches das Trennelement abgestützt oder abstützbar ist. Vorzugsweise ist der Lagerbock an einer Spritzwand des oder eines Fahrzeugs befestigt. Die Spritzwand bildet insbesondere den oder einen Bereich der Karosserie. Der Pedalhebel ist oder bildet z.B. ein Bremspedal oder ein Kupplungspedal. Der Lagerbock besteht bevorzugt aus Kunststoff oder aus Metall oder aus einer Kombination dieser Werkstoffe.

Das Lagerelement ist z.B. als Bolzen oder als Rohr oder Hülse ausgebildet. Beispielsweise bildet das Lagerelement einen Lagerbolzen oder eine Lagerhülse. Das Lagerelement ist vorzugsweise zylindrisch oder hohlzylindrisch ausgebildet. Bevorzugt weist das Lagerelement eine oder wenigstens eine oder mehrere, vorzugsweise zwei Sollbruchstellen auf. Insbesondere weist das Lagerelement beidseits des Pedalhebels jeweils eine Sollbruchstelle auf und/oder der Pedalhebel ist zwischen den Sollbruchstellen an dem Lagerelement angeordnet und/oder befestigt und/oder gelagert. Das Lagerelement besteht bevorzugt aus Kunststoff oder aus Metall oder aus einer Kombination dieser Werkstoffe.

Der Pedalhebel ist z.B. als länglicher Körper ausgebildet. Vorteilhaft ist der Pedalhebel als länglicher, flacher Körper, ausgebildet. Bevorzugt weist der Pedalhebel an einem, beispielsweise dem Lagerelement abgewandten, freien Ende eine Trittfläche auf. Insbesondere weist der Pedalhebel, vorzugsweise zwischen der Trittfläche und der Pedalschwenkachse, eine Anschlussstelle auf, an welcher der Pedalhebel, insbesondere mechanisch, mit einer Funktionskomponente verbunden oder verbindbar ist. Die Funktionskomponente ist z.B. ein Bremskraftzylinder oder ein Kupplungsgeberzylinder. Der Pedalhebel besteht bevorzugt aus Kunststoff oder aus Metall oder aus einer Kombination dieser Werkstoffe. Vorzugsweise besteht die Trittfläche aus Kunststoff oder aus Metall oder aus Gummi oder aus einer Kombination dieser Werkstoffe.

Durch das Auffangen des Pedalhebels durch die Auffangvorrichtung ist z.B. das Pedalübersetzungsverhältnis veränderbar, insbesondere verkleinerbar.

Beispielsweise ist das Pedalübersetzungsverhältnis des von der Auffangvorrichtung aufgefangenen Pedalhebes anders oder kleiner als das Pedalübersetzungsverhältnis des Pedalhebels im nicht abgescherten Zustand des Lagerelements. Somit kann z.B. der Pedalhebelweg zum Betätigen der Funktionskomponente durch das Abscheren des Lagerelements verändert, insbesondere verkürzt werden.

Gemäß einer Ausgestaltung ist die Hilfsschwenkachse durch eine oder während einer Betätigung des von der Auffangvorrichtung aufgefangenen Pedalhebels, vorzugsweise parallel, verlagerbar. Insbesondere kann sich während einer Betätigung des von der Auffangvorrichtung aufgefangenen Pedalhebels die Lage der Hilfsschwenkachse ändern und/oder, vorzugsweise parallel, verlagern. Beispielsweise ist die Hilfsschenkachse bezüglich des Lagerbocks während einer Betätigung des von der Auffangvorrichtung aufgefangenen Pedalhebels nicht ortsfest. Vorteilhaft ist der Pedalhebel bei abgeschertem Lagerelement mittels der Auffangvorrichtung um die oder eine bezüglich des Lagerbocks nicht ortsfeste und/oder verlagerbare Hilfsschwenkachse schwenkbar lagerbar.

Die Auffangvorrichtung besteht bevorzugt aus Kunststoff oder aus Metall oder aus einer Kombination dieser Werkstoffe. Insbesondere bestehen die Hilfslageraufnahmen aus Kunststoff oder aus Metall oder aus einer Kombination dieser Werkstoffe. Vorteilhaft sind die Hilfslageraufnahmen einstückig und/oder materialhomogen und/oder monolithisch mit dem Lagerbock oder dem Trennelement ausgebildet.

Das nicht beanspruchte Hilfslagerelement ist z.B. als Bolzen oder als Rohr oder Hülse ausgebildet. Beispielsweise bildet das Hilfslagerelement einen Hilfslagerbolzen oder eine Hilfslagerhülse. Das Hilfslagerelement ist vorzugsweise zylindrisch oder hohlzylindrisch ausgebildet. Bevorzugt besteht das Hilfslagerelement aus Kunststoff oder aus Metall oder aus einer Kombination dieser Werkstoffe.

Das Fahrzeugbauteil ist insbesondere ein Karosseriebauteil des oder eines Fahrzeugs. Bevorzugt ist das Fahrzeugbauteil ein Querträger des oder eines Fahrzeugs. Insbesondere besteht das Fahrzeugbauteil aus Kunststoff oder aus Metall oder aus einer Kombination dieser Werkstoffe. Vorzugsweise besteht das Fahrzeugbauteil aus einem Eisenwerkstoff, wie z.B. Stahl.

Die Erfindung wird nachfolgend anhand bevorzugter Ausführungsformen unter Bezugnahme auf die Zeichnung beschrieben. In der Zeichnung zeigen:
Fig. 1 eine perspektivische Ansicht einer einen Pedalhebel und einen Lagerbock aufweisenden Pedalvorrichtung gemäß einer ersten Ausführungsform,
Fig. 2 eine Schnittdarstellung der Pedalvorrichtung nach Fig. 1, wobei ein Lagerelement zur Lagerung des Pedalhebels an dem Lagerbock und ein Trennelement ersichtlich sind,
Fig. 3 die Schnittdarstellung nach Fig. 2, wobei das Lagerelement von dem Trennelement abgeschert ist oder worden ist,
Fig. 4 eine perspektivische Ansicht einer einen Pedalhebel und einen Lagerbock aufweisenden Pedalvorrichtung gemäß einer nicht beanspruchten zweiten Ausführungsform,
Fig. 5 eine Schnittdarstellung der Pedalvorrichtung nach Fig. 4, wobei ein Lagerelement zur Lagerung des Pedalhebels an dem Lagerbock und ein Trennelement ersichtlich sind,
Fig. 6 die Schnittdarstellung nach Fig. 5, wobei das Lagerelement von dem Trennelement abgeschert ist oder worden ist,
Fig. 7 eine perspektivische Ansicht einer einen Pedalhebel und einen Lagerbock aufweisenden Pedalvorrichtung gemäß einer dritten Ausführungsform,
Fig. 8 eine Schnittdarstellung der Pedalvorrichtung nach Fig. 7, wobei ein Lagerelement zur Lagerung des Pedalhebels an dem Lagerbock und ein Trennelement ersichtlich sind, und
Fig. 9 die Schnittdarstellung nach Fig. 8, wobei das Lagerelement von dem Trennelement abgeschert ist oder worden ist.

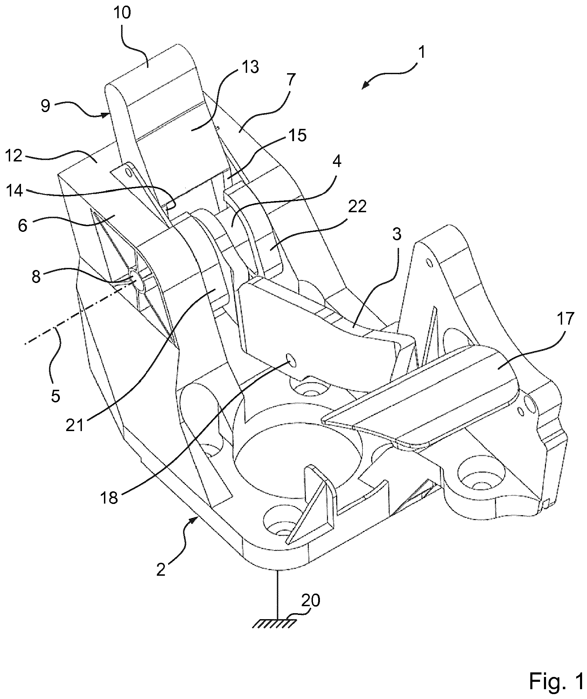

Aus Fig. 1 ist eine perspektivische Ansicht einer Pedalvorrichtung 1 gemäß einer ersten Ausführungsform ersichtlich, wobei die Pedalvorrichtung 1 einen Lagerbock 2 und einen Pedalhebel 3 aufweist, der mittels eines Lagerelements 4 um eine Pedalschwenkachse 5 schwenkbar an dem Lagerbock 2 gelagert ist. Der Lagerbock weist 2 dazu zwei zueinander beabstandete Wangen 6 und 7 auf, zwischen denen sich das Lagerelement 4 erstreckt, an welchem der Pedalhebel 3 zwischen den Wangen 6 und 7 angeordnet ist. Das Lagerelement 4 ist an den Wangen 6 und 7 gelagert und greift dazu in Löcher 8 ein, die in den Wangen 6 und 7 vorgesehen sind.

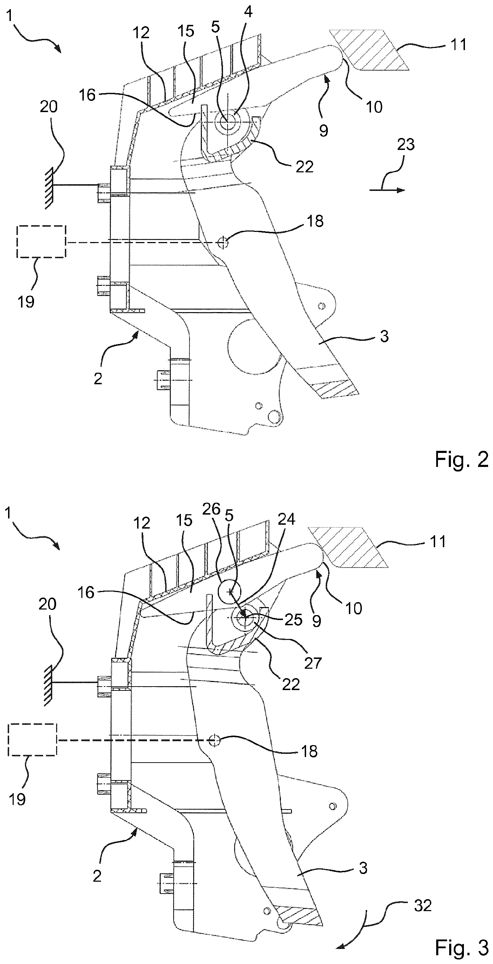

Aus Fig. 2 ist eine Schnittansicht der in Fig. 1 gezeigten Pedalvorrichtung 1 quer zur Pedalschwenkachse 5 ersichtlich, wobei die in Fig. 2 dargestellte Lage der Pedalvorrichtung 1 der Konstruktionslage der Pedalvorrichtung 1 entspricht. Die Pedalvorrichtung 1 weist ein zwischen den Schenkeln 6 und 7 angeordnetes Trennelement 9 auf, das über eine Stützfläche 10 gegen ein Fahrzeugbauteil 11 abgestützt ist, welches insbesondere einen Querträger bildet. Das Trennelement 9 ist ferner zwischen dem Lagerelement 4 und einem an dem Lagerbock 2 vorgesehenen Widerlager 12 angeordnet, welches durch eine die Wangen 6 und 7 miteinander verbindende Wand des Lagerbocks 2 gebildet ist. Das Widerlager 12 und die Wangen 6 und 7 bilden in diesem Sinne ein Gehäuse, in welchem der Pedalhebel 3 um die Pedalschwenkachse 5 schwenkbar gelagert ist. Ferner ist das Trennelement 9 in dem Gehäuse angeordnet. Das Trennelement 9 weist einen Grundkörper 13 und zwei parallele Schenkel 14 und 15 auf, die durch den Grundkörper 13 miteinander verbunden sind und sich von diesem weg erstrecken.

Der Pedalhebel 3 weist zu den Wangen 6 und 7 jeweils einen Abstand auf, in welchem das Lagerelement 4 verläuft. Die in diesen Abständen verlaufenden Bereiche des Lagerelements 4 bilden Anlagebereiche, an welche Wirkflächen 16 des Trennelements 9 angreifen können. Die Wirkflächen 16 des Trennelements 9 sind dabei durch die dem Lagerelement 4 zugewandten Oberflächen der Schenkel 14 und 15 des Trennelements 9 gebildet. Ferner weist der Pedalhebel 3 zu den Schenkeln 14 und 15 jeweils einen Abstand auf, in welchem das Lagerelement 4 verläuft.

An seinem dem Lagerelement 4 abgewandten, freien Ende weist der Pedalhebel 3 eine Trittfläche 17 auf, wobei zwischen dem Lagerelement 4 und der Trittfläche 17 an dem Pedalhebel 3 eine Anschlussstelle 18 vorgesehen ist, an welcher der Pedalhebel 3 mechanisch mit einer lediglich schematisch angedeuteten Funktionskomponente 19 verbunden oder verbindbar ist. Die Funktionskomponente 19 bildet z.B. einen Bremskraftzylinder oder einen Kupplungsgeberzylinder. Die Pedalvorrichtung 1 ist innerhalb einer Fahrgastzelle eines Kraftfahrzeugs angeordnet, wobei der Lagerbock 2 mit einer lediglich schematisch angedeuteten Spritzwand 20 des Kraftfahrzeugs fest verbunden ist.

An den einander zugewandten Seiten der Wangen 6 und 7 sind zwei das Lagerelement 4 teilweise umgreifende, schalenförmige Hilfslageraufnahmen 21 und 22 vorgesehen, die von den Wangen 6 und 7 in Richtung des Pedalhebels 3 vorstehen. Diese Hilfslageraufnahmen 21 und 22 bilden eine Auffangvorrichtung, deren Funktion unter Bezugnahme auf Fig. 3 erläutert wird.

Wird der Lagerbock 2 infolge eines Unfalls in Richtung des Pfeils 23 relativ zu dem Fahrzeugbauteil 11 bewegt, so schert das Trennelement 9 mit seinen Schenkeln 14 und 15 das Lagerelement 4 an den Anlagebereichen des Lagerelements 4 ab, was aus Fig. 3 ersichtlich ist, welche die Ansicht nach Fig. 2 bei abgeschertem Lagerelement 4 zeigt. Durch das Abscheren des Lagerelements 4 wird der Pedalhebel 3 versetzt, was in Fig. 3 durch den Pfeil 24 verdeutlicht ist, der sich von der Pedalschwenkachse 5 zu einer Hilfsschwenkachse 25 erstreckt. Die ursprüngliche Lage des nicht abgescherten Lagerelements 4 ist dabei durch einen Kreis 26 angedeutet. Ferner wird durch das Abscheren des Lagerelements 4 der Pedalhebel in 3 Richtung des Pfeils 32 verschwenkt.

Durch das Abscheren des Lagerelements 4 verbleiben an dem Pedalhebel 3 von diesem in Richtung auf die Wangen 6 und 7 abstehende Stummel 27 des Lagerelements 4, die von den Hilfslageraufnahmen 21 und 22 aufgenommen werden, sodass der Pedalhebel 3 mittels der Lagerelement-Stummel 27 um die Hilfsschwenkachse 25 schwenkbar in den Hilfslageraufnahmen 21 und 22 gelagert ist. Der Pedalhebel 3 wird somit durch die Hilfslageraufnahmen 21 und 22 aufgefangen und ist weiterhin betätigbar, sodass auch die Funktionskomponente 19 betätigbar ist.

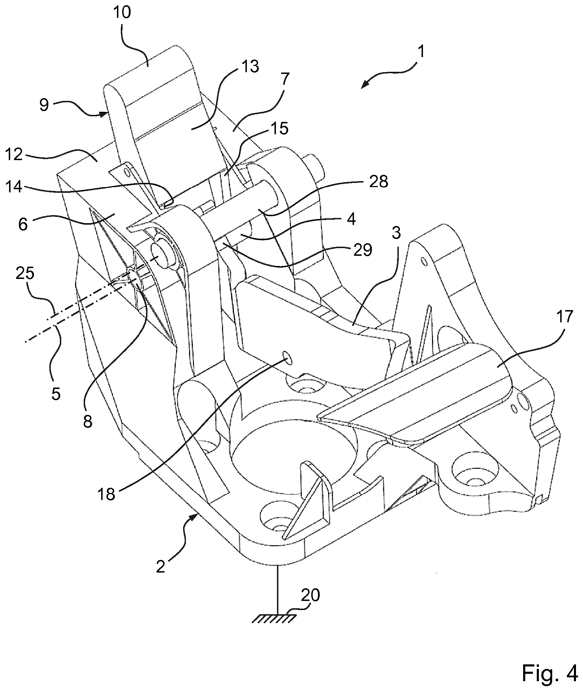

Aus Fig. 4 ist eine perspektivische Ansicht einer Pedalvorrichtung 1 gemäß einer nicht beanspruchten zweiten Ausführungsform ersichtlich, wobei zu der ersten Ausführungsform identische oder ähnliche Merkmale mit denselben Bezugszeichen wie bei der ersten Ausführungsform bezeichnet sind. Die Pedalvorrichtung 1 weist einen Lagerbock 2 und einen Pedalhebel 3 auf, der mittels eines Lagerelements 4 um eine Pedalschwenkachse 5 schwenkbar an dem Lagerbock 2 gelagert ist. Der Lagerbock weist 2 dazu zwei zueinander beabstandete Wangen 6 und 7 auf, zwischen denen sich das Lagerelement 4 erstreckt, an welchem der Pedalhebel 3 zwischen den Wangen 6 und 7 angeordnet ist. Das Lagerelement 4 ist an den Wangen 6 und 7 gelagert und greift dazu in Löcher 8 ein, die in den Wangen 6 und 7 vorgesehen sind.

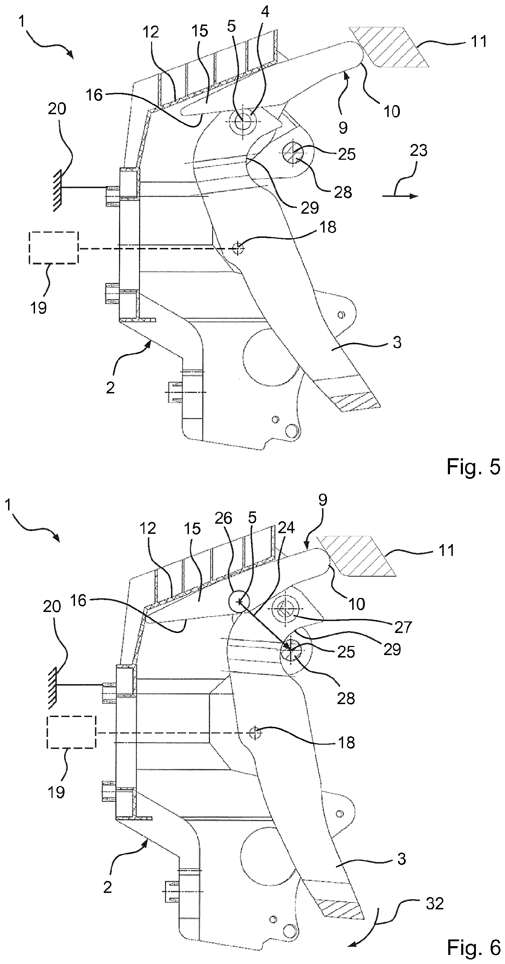

Aus Fig. 5 ist eine Schnittansicht der in Fig. 4 gezeigten Pedalvorrichtung 1 quer zur Pedalschwenkachse 5 ersichtlich, wobei die in Fig. 5 dargestellte Lage der Pedalvorrichtung 1 der Konstruktionslage der Pedalvorrichtung 1 entspricht. Die Pedalvorrichtung 1 weist ein zwischen den Schenkeln 6 und 7 angeordnetes Trennelement 9 auf, das über eine Stützfläche 10 gegen ein Fahrzeugbauteil 11 abgestützt ist. Das Trennelement 9 ist ferner zwischen dem Lagerelement 4 und einem an dem Lagerbock 2 vorgesehen Widerlager 12 angeordnet, welches durch eine die Wangen 6 und 7 miteinander verbindende Wand des Lagerbocks 2 gebildet ist. Das Widerlager 12 und die Wangen 6 und 7 bilden in diesem Sinne ein Gehäuse, in welchem der Pedalhebel 3 um die Pedalschwenkachse 5 schwenkbar gelagert ist. Ferner ist das Trennelement 9 in dem Gehäuse angeordnet. Das Trennelement 9 weist einen Grundkörper 13 und zwei parallele Schenkel 14 und 15 auf, die durch den Grundkörper 13 miteinander verbunden sind und sich von diesem weg erstrecken.

Der Pedalhebel 3 weist zu den Wangen 6 und 7 jeweils einen Abstand auf, in welchem das Lagerelement 4 verläuft. Die in diesen Abständen verlaufenden Bereiche des Lagerelements 4 bilden Anlagebereiche, an welche Wirkflächen 16 des Trennelements 9 angreifen können. Die Wirkflächen 16 des Trennelements 9 sind dabei durch die dem Lagerelement 4 zugewandten Oberflächen der Schenkel 14 und 15 des Trennelements 9 gebildet. Ferner weist der Pedalhebel 3 zu den Schenkeln 14 und 15 jeweils einen Abstand auf, in welchem das Lagerelement 4 verläuft.

An seinem dem Lagerelement 4 abgewandten, freien Ende weist der Pedalhebel 3 eine Trittfläche 17 auf, wobei zwischen dem Lagerelement 4 und der Trittfläche 17 an dem Pedalhebel 3 eine Anschlussstelle 18 vorgesehen ist, an welcher der Pedalhebel 3 mechanisch mit einer lediglich schematisch angedeuteten Funktionskomponente 19 verbunden oder verbindbar ist. Die Funktionskomponente 19 bildet z.B. einen Bremskraftzylinder oder einen Kupplungsgeberzylinder. Die Pedalvorrichtung 1 ist innerhalb einer Fahrgastzelle eines Kraftfahrzeugs angeordnet, wobei der Lagerbock 2 mit einer lediglich schematisch angedeuteten Spritzwand 20 des Kraftfahrzeugs fest verbunden ist.

An den Wangen 6 und 7 ist ein Hilfslagerelement 28 befestigt, welches sich zwischen den Wangen 6 und 7 erstreckt und parallel zu dem Lagerelement 4 verläuft. Ferner ist an einer dem Hilfslagerelement 28 zugewandten Seite des Pedalhebels 3 eine konkave Hilfslagerkontur 29 vorgesehen. Das Hilfslagerelement 28 und die Hilfslagerkontur 29 bilden eine Auffangvorrichtung, deren Funktion unter Bezugnahme auf Fig. 6 erläutert wird.

Wird der Lagerbock 2 infolge eines Unfalls in Richtung des Pfeils 23 relativ zu dem Fahrzeugbauteil 11 bewegt, so schert das Trennelement 9 mit seinen Schenkeln 14 und 15 das Lagerelement 4 an den Anlagebereichen des Lagerelements 4 ab, was aus Fig. 6 ersichtlich ist, welche die Ansicht nach Fig. 5 bei abgeschertem Lagerelement 4 zeigt. Durch das Abscheren des Lagerelements 4 wird der Pedalhebel 3 versetzt, was in Fig. 6 durch den Pfeil 24 verdeutlicht ist, der sich von der Pedalschwenkachse 5 zu einer Hilfsschwenkachse 25 erstreckt, in deren Richtung sich das Hilfslagerelement 28 erstreckt. Die ursprüngliche Lage des nicht abgescherten Lagerelements 4 ist dabei durch einen Kreis 26 angedeutet. Ferner wird durch das Abscheren des Lagerelements 4 der Pedalhebel in 3 Richtung des Pfeils 32 verschwenkt.

Durch den Versatz des Pedalhebels 3 infolge des Abscherens des Lagerelements 4 legt sich die konkave Hilfslagerkontur 29 das Hilfslagerelement 28 teilweise umgreifend an das Hilfslagerelement 28 an, sodass der Pedalhebel 3 mittels seiner Hilfslagerkontur 29 um die Hilfsschwenkachse 25 schwenkbar an dem Hilfslagerelement 28 gelagert ist. Der Pedalhebel 3 wird somit durch das Eingreifen des Hilfslagerelements 28 in die Hilfslagerkontur 29 aufgefangen und ist weiterhin betätigbar, sodass auch die Funktionskomponente 19 betätigbar ist.

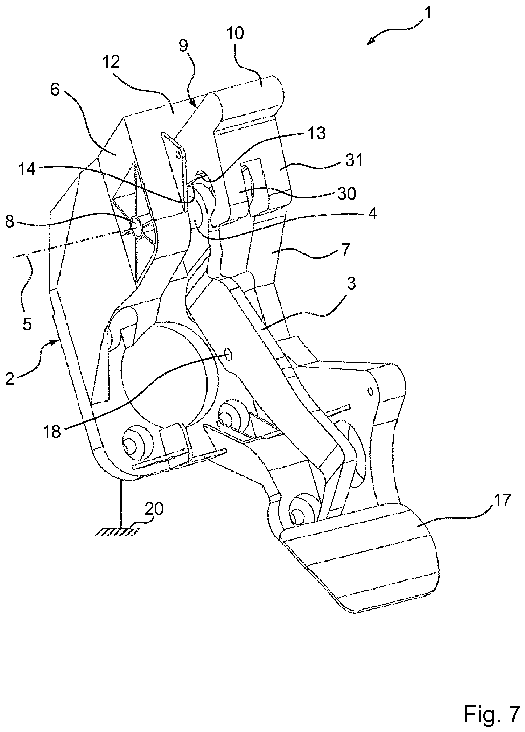

Aus Fig. 7 ist eine perspektivische Ansicht einer Pedalvorrichtung 1 gemäß einer dritten Ausführungsform ersichtlich, wobei zu der ersten Ausführungsform identische oder ähnliche Merkmale mit denselben Bezugszeichen wie bei der ersten Ausführungsform bezeichnet sind. Die Pedalvorrichtung 1 weist einen Lagerbock 2 und einen Pedalhebel 3 auf, der mittels eines Lagerelements 4 um eine Pedalschwenkachse 5 schwenkbar an dem Lagerbock 2 gelagert ist. Der Lagerbock weist 2 dazu zwei zueinander beabstandete Wangen 6 und 7 auf, zwischen denen sich das Lagerelement 4 erstreckt, an welchem der Pedalhebel 3 zwischen den Wangen 6 und 7 angeordnet ist. Das Lagerelement 4 ist an den Wangen 6 und 7 gelagert und greift dazu in Löcher 8 ein, die in den Wangen 6 und 7 vorgesehen sind.

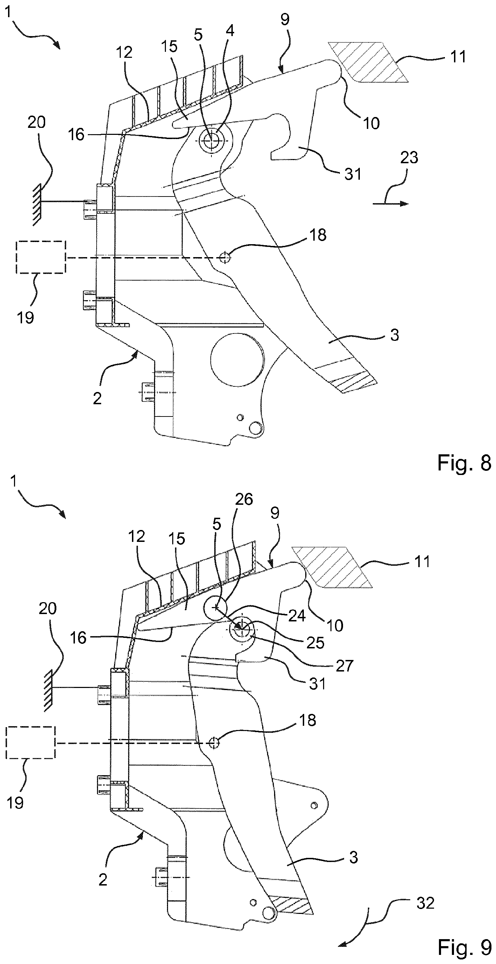

Aus Fig. 8 ist eine Schnittansicht der in Fig. 7 gezeigten Pedalvorrichtung 1 quer zur Pedalschwenkachse 5 ersichtlich, wobei die in Fig. 8 dargestellte Lage der Pedalvorrichtung 1 der Konstruktionslage der Pedalvorrichtung 1 entspricht. Die Pedalvorrichtung 1 weist ein zwischen den Schenkeln 6 und 7 angeordnetes Trennelement 9 auf, das über eine Stützfläche 10 gegen ein Fahrzeugbauteil 11 abgestützt ist. Das Trennelement 9 ist ferner zwischen dem Lagerelement 4 und einem an dem Lagerbock 2 vorgesehen Widerlager 12 angeordnet, welches durch eine die Wangen 6 und 7 miteinander verbindende Wand des Lagerbocks 2 gebildet ist. Das Widerlager 12 und die Wangen 6 und 7 bilden in diesem Sinne ein Gehäuse, in welchem der Pedalhebel 3 um die Pedalschwenkachse 5 schwenkbar gelagert ist. Ferner ist das Trennelement 9 in dem Gehäuse angeordnet. Das Trennelement 9 weist einen Grundkörper 13 und zwei parallele Schenkel 14 und 15 auf, die durch den Grundkörper 13 miteinander verbunden sind und sich von diesem weg erstrecken.

Der Pedalhebel 3 weist zu den Wangen 6 und 7 jeweils einen Abstand auf, in welchem das Lagerelement 4 verläuft. Die in diesen Abständen verlaufenden Bereiche des Lagerelements 4 bilden Anlagebereiche, an welche Wirkflächen 16 des Trennelements 9 angreifen können. Die Wirkflächen 16 des Trennelements 9 sind dabei durch die dem Lagerelement 4 zugewandten Oberflächen der Schenkel 14 und 15 des Trennelements 9 gebildet. Ferner weist der Pedalhebel 3 zu den Schenkeln 14 und 15 jeweils einen Abstand auf, in welchem das Lagerelement 4 verläuft.

An seinem dem Lagerelement 4 abgewandten, freien Ende weist der Pedalhebel 3 eine Trittfläche 17 auf, wobei zwischen dem Lagerelement 4 und der Trittfläche 17 an dem Pedalhebel 3 eine Anschlussstelle 18 vorgesehen ist, an welcher der Pedalhebel 3 mechanisch mit einer lediglich schematisch angedeuteten Funktionskomponente 19 verbunden oder verbindbar ist. Die Funktionskomponente 19 bildet z.B. einen Bremskraftzylinder oder einen Kupplungsgeberzylinder. Die Pedalvorrichtung 1 ist innerhalb einer Fahrgastzelle eines Kraftfahrzeugs angeordnet, wobei der Lagerbock 2 mit einer lediglich schematisch angedeuteten Spritzwand 20 des Kraftfahrzeugs fest verbunden ist.

An dem Trennelement 9 sind zwei Hilfslageraufnahmen 30 und 31 vorgesehen, die von einer dem Lagerelement 4 zugewandten Seite des Trennelements 9 hakenförmig abstehen und zu dem Lagerelement 4 hin offen sind. Diese Hilfslageraufnahmen 30 und 31 bilden eine Auffangvorrichtung, deren Funktion unter Bezugnahme auf Fig. 9 erläutert wird.

Wird der Lagerbock 2 infolge eines Unfalls in Richtung des Pfeils 23 relativ zu dem Fahrzeugbauteil 11 bewegt, so schert das Trennelement 9 mit seinen Schenkeln 14 und 15 das Lagerelement 4 an den Anlagebereichen des Lagerelements 4 ab, was aus Fig. 9 ersichtlich ist, welche die Ansicht nach Fig. 8 bei abgeschertem Lagerelement 4 zeigt. Durch das Abscheren des Lagerelements 4 wird der Pedalhebel versetzt, was in Fig. 9 durch den Pfeil 24 verdeutlicht ist, der sich von der Pedalschwenkachse 5 zu einer Hilfsschwenkachse 25 erstreckt. Die ursprüngliche Lage des nicht abgescherten Lagerelements 4 ist dabei durch einen Kreis 26 angedeutet. Ferner wird durch das Abscheren des Lagerelements 4 der Pedalhebel in 3 Richtung des Pfeils 32 verschwenkt.

Durch das Abscheren des Lagerelements 4 verbleiben an dem Pedalhebel 3 von diesem in Richtung auf die Wangen 6 und 7 abstehende Stummel 27 des Lagerelements 4, die von den Hilfslageraufnahmen 30 und 31 aufgenommen werden, sodass der Pedalhebel 3 mittels der Lagerelement-Stummel 27 um die Hilfsschwenkachse 25 schwenkbar in den Hilfslageraufnahmen 30 und 31 gelagert ist. Der Pedalhebel 3 wird somit durch die Hilfslageraufnahmen 30 und 31 aufgefangen und ist weiterhin betätigbar, sodass auch die Funktionskomponente 19 betätigbar ist.

### Bezugszeichenliste

- 1: Pedalvorrichtung
- 2: Lagerbock
- 3: Pedalhebel
- 4: Lagerelement
- 5: Pedalschwenkachse
- 6: Wange des Lagerbocks
- 7: Wange des Lagerbocks
- 8: Loch in Wange
- 9: Trennelement
- 10: Stützfläche des Trennelements
- 11: Fahrzeugbauteil / Querträger
- 12: Widerlager / Wand des Lagerbocks
- 13: Grundkörper des Trennelements
- 14: Schenkel des Trennelements
- 15: Schenkel des Trennelements
- 16: Wirkfläche des Trennelements
- 17: Trittfläche des Pedalhebels
- 18: Anschlussstelle am Pedalhebel
- 19: Funktionskomponente
- 20: Spritzwand
- 21: Hilfslageraufnahme
- 22: Hilfslageraufnahme
- 23: Bewegungsrichtung
- 24: Pfeil / Versatz des Pedalhebels
- 25: Hilfsschwenkachse
- 26: Kreis / ursprüngliche Lage des Lagerelements
- 27: Lagerelement-Stummel
- 28: Hilfslagerelement
- 29: Hilfslagerkontur
- 30: Hilfslageraufnahme
- 31: Hilfslageraufnahme
- 32: Pfeil, Schwenkrichtung

## Patentansprüche

1. Pedalvorrichtung für ein Fahrzeug, mit einem Lagerbock (2), einem Pedalhebel (3), der mittels eines Lagerelements (4) um eine Pedalschwenkachse (5) schwenkbar an dem Lagerbock (2) gelagert ist, einem Trennelement (9), mittels welchem das Lagerelement (4) abscherbar ist, und einer Auffangvorrichtung, mittels welcher der Pedalhebel (3) bei abgeschertem Lagerelement (4) auffangbar und um eine Hilfsschwenkachse (25) schwenkbar lagerbar ist, **dadurch gekennzeichnet, dass** die Auffangvorrichtung Hilfslageraufnahmen (21, 22; 30, 31) aufweist, von welchen bei abgeschertem Lagerelement (4) von dem Pedalhebel (3) abstehende Lagerelement-Stummel (27) des abgescherten Lagerelements (4) aufnehmbar sind, mittels welchen der Pedalhebel (3) um die Hilfsschwenkachse (25) schwenkbar in oder an den Hilfslageraufnahmen (21, 22; 30, 31) lagerbar ist.

2. Pedalvorrichtung nach Anspruch 1, **dadurch gekennzeichnet, dass** das Trennelement (9) gegen ein Fahrzeugbauteil (11) abgestützt oder abstützbar ist und das Lagerelement (4) mittels des Trennelements (9) infolge einer durch eine äußere Krafteinwirkung bewirkten Relativbewegung zwischen dem Trennelement (9) und dem Lagerelement (4) abscherbar ist.

3. Pedalvorrichtung nach Anspruch 1 oder 2, **dadurch gekennzeichnet, dass** die Hilfslageraufnahmen (21, 22; 30, 31) schalenförmig oder hakenförmig ausgebildet sind.

4. Pedalvorrichtung nach einem der vorangehenden Ansprüche, **dadurch gekennzeichnet, dass** die Hilfslageraufnahmen (21, 22; 39, 31) an ihren dem Lagerelement (4) zugewandten Seiten offen sind.

5. Pedalvorrichtung nach einem der vorangehenden Ansprüche, **dadurch gekennzeichnet, dass** die Hilfslageraufnahmen (21, 22; 39, 31) zueinander einen Abstand aufweisen, in dem oder den der Pedalhebel (3) angeordnet oder in Folge der oder einer Relativbewegung zwischen dem Trennelement (9) und dem Lagerelement (4) anordenbar ist.

6. Pedalvorrichtung nach einem der vorangehenden Ansprüche, **dadurch gekennzeichnet, dass** die Hilfslageraufnahmen (21, 22; 30, 31) an dem Lagerbock (2) oder an dem Trennelement (9) vorgesehen sind.

7. Pedalvorrichtung nach Anspruch 6, **dadurch gekennzeichnet, dass** die an dem Lagerbock (2) vorgesehenen Hilfslageraufnahmen (21, 22) das Lagerelement (4) teilweise umgreifen.

8. Pedalvorrichtung nach Anspruch 6 oder 7, **dadurch gekennzeichnet, dass** das Lagerelement (4) zwischen dem Trennelement (9) und den an dem Lagerbock (2) vorgesehenen Hilfslageraufnahmen (21, 22) angeordnet ist.

9. Pedalvorrichtung nach Anspruch 6, **dadurch gekennzeichnet, dass** die an dem Trennelement (9) vorgesehenen Hilfslageraufnahmen (30,31) von einer dem Lagerelement (4) zugewandten Seite des Trennelements (9) abstehen und zu dem Lagerelement (4) hin offen sind.

10. Pedalvorrichtung nach einem der vorangehenden Ansprüche, **dadurch gekennzeichnet, dass** die Hilfsschwenkachse (25) im Abstand und parallel zu der Pedalschwenkachse (5) verläuft.

11. Pedalvorrichtung nach einem der vorangehenden Ansprüche, **dadurch gekennzeichnet, dass** der Lagerbock (2) zwei im Abstand zueinander angeordnete Wangen (6, 7) aufweist, zwischen denen sich das Lagerelement (4) erstreckt, welches an den Wangen (6, 7) fixiert oder gelagert ist, wobei der Pedalhebel (3) zwischen den Wangen (6, 7) auf oder an dem Lagerelement (4) angeordnet ist.

12. Pedalvorrichtung nach Anspruch 11, **dadurch gekennzeichnet, dass** die an dem Lagerbock (2) vorgesehenen Hilfslageraufnahmen (21, 22) an den Wangen (6, 7) vorgesehen sind und jeweils in Richtung der Pedalhebel (3) von der jeweiligen Wange (6, 7) vorstehen.

## Claims

1. Pedal device for a vehicle, having a bearing block (2), a pedal lever (3), which is mounted on the bearing block (2) so as to be pivotable about a pedal pivot axis (5) by means of a bearing element (4), a separating element (9) by means of which the bearing element (4) can be sheared off, and a collecting device by means of which the pedal lever (3) can be collected when the bearing element (4) is sheared off and said pedal lever being mounted so as to be pivotable about an auxiliary pivot axis (25), **characterised in that** the collecting device has auxiliary bearing receptacles (21, 22; 30, 31), which can collect bearing element stumps (27) of the sheared-off bearing element (4), which protrude from the pedal lever (3) in the case of the sheared-off bearing element (4), and by means of which bearing element the pedal lever (3) can be mounted in or on the auxiliary bearing receptacles (21, 22; 30, 31) so as to be pivotable about the auxiliary pivot axis (25).

2. Pedal device according to claim 1, **characterised in that** the separating element (9) is supported or can be supported against a vehicle component (11) and the bearing element (4) can be sheared off by means of the separating element (9) as a result of a relative movement between the separating element (9) and the bearing element (4) caused by an external force.

3. Pedal device according to claim 1 or 2, **characterised in that** the auxiliary bearing receptacles (21, 22; 30, 31) are formed in a shell-shaped or hook-shaped manner.

4. Pedal device according to any one of the preceding claims, **characterised in that** the auxiliary bearing receptacles (21, 22; 39, 31) are open on their sides facing the bearing element (4).

5. Pedal device according to any one of the preceding claims, **characterised in that** the auxiliary bearing receptacles (21, 22; 39, 31) have a distance from one another at which the pedal lever (3) is arranged or can be arranged as a result of the or a relative movement between the separating element (9) and the bearing element (4).

6. Pedal device according to any one of the preceding claims, **characterised in that** the auxiliary bearing receptacles (21, 22; 30, 31) are provided on the bearing block (2) or on the separating element (9).

7. Pedal device according to claim 6, **characterised in that** the auxiliary bearing receptacles (21, 22) provided on the bearing block (2) partially encompass the bearing element (4).

8. Pedal device according to claim 6 or 7, **characterised in that** the bearing element (4) is arranged between the separating element (9) and the auxiliary bearing receptacles (21, 22) provided on the bearing block (2).

9. Pedal device according to claim 6, **characterised in that** the auxiliary bearing receptacles (30, 31) provided on the separating element (9) protrude from a side of the separating element (9) facing the bearing element (4) and are open towards the bearing element (4).

10. Pedal device according to any one of the preceding claims, **characterised in that** the auxiliary pivot axis (25) runs at a distance and parallel to the pedal pivot axis (5).

11. Pedal device according to any one of the preceding claims, **characterised in that** the bearing block (2) has two cheeks (6, 7) arranged at a distance from one another, between which the bearing element (4) extends, which is fixed or mounted on the cheeks (6, 7), wherein the pedal lever (3) is arranged between the cheeks (6, 7) on or at the bearing element (4).

12. Pedal device according to claim 11, **characterised in that** the auxiliary bearing receptacles (21, 22) provided on the bearing block (2) are provided on the cheeks (6, 7) and each protrude in the direction of the pedal lever (3) from the respective cheek (6, 7).

## Revendications

1. Dispositif de pédale pour un véhicule, comprenant un support de palier (2), un levier de pédale (3) qui est monté sur le support de palier (2) au moyen d'un élément de palier (4) de manière à pouvoir pivoter autour d'un axe de pivotement de pédale (5), un élément de séparation (9) au moyen duquel l'élément de palier (4) peut être cisaillé, et un dispositif de réception au moyen duquel le levier de pédale (3) peut être saisi lorsque l'élément de palier (4) est cisaillé et peut être logé de manière pivotante autour d'un axe de pivotement auxiliaire (25), **caractérisé en ce que** le dispositif de réception comporte des logements de palier auxiliaires (21, 22 ; 30, 31), par lesquels, lorsque l'élément de palier (4) est cisaillé, des bouts d'élément de palier (27) de l'élément de palier cisaillé (4) peuvent être reçus, au moyen desquels le levier de pédale (3) peut être logé de manière pivotante autour de l'axe de pivotement auxiliaire (25) dans ou sur les logements de palier auxiliaires (21, 22 ; 30, 31).

2. Dispositif de pédale selon la revendication 1, **caractérisé en ce que** l'élément de séparation (9) s'appuie ou peut s'appuyer contre un composant de véhicule (11) et l'élément de palier (4) peut être cisaillé au moyen de l'élément de séparation (9) suite à un mouvement relatif entre l'élément de séparation (9) et l'élément de palier (4) provoqué par l'action d'une force extérieure.

3. Dispositif de pédale selon la revendication 1 ou 2, **caractérisé en ce que** les logements de palier auxiliaires (21, 22 ; 30, 31) sont réalisés en forme de cuvette ou de crochet.

4. Dispositif de pédale selon l'une des revendications précédentes, **caractérisé en ce que** les logements de palier auxiliaires (21, 22 ; 39, 31) sont ouverts sur leurs côtés tournés vers l'élément de palier (4).

5. Dispositif de pédale selon l'une des revendications précédentes, **caractérisé en ce que** les logements de palier auxiliaires (21, 22 ; 39, 31) présentent l'un par rapport à l'autre une distance dans laquelle ou à laquelle le levier de pédale (3) est disposé ou peut être disposé à la suite du ou d'un mouvement relatif entre l'élément de séparation (9) et l'élément de palier (4).

6. Dispositif selon l'une quelconque des revendications précédentes, **caractérisé en ce que** les filets d'écrou (21, 22 ; 30, 31) pour les vis de réglage (2) sont réalisés dans l'élément de séparation (9).

7. Dispositif de pédale selon la revendication 6, **caractérisé en ce que** les logements de palier auxiliaires (21, 22) prévus sur le support de palier (2) entourent partiellement l'élément de palier (4).

8. Dispositif de pédale selon la revendication 6 ou 7, **caractérisé en ce que** l'élément de palier (4) est disposé entre l'élément de séparation (9) et les logements de palier auxiliaires (21, 22) prévus sur le support de palier (2).

9. Dispositif de pédale selon la revendication 6, **caractérisé en ce que** les logements de palier auxiliaires (30, 31) prévus sur l'élément de séparation (9) font saillie d'un côté de l'élément de séparation (9) orienté vers l'élément de palier (4) et sont ouverts vers l'élément de palier (4).

10. Dispositif de pédale selon l'une des revendications précédentes, **caractérisé en ce que** l'axe de pivotement auxiliaire (25) est espacé et parallèle à l'axe de pivotement de la pédale (5).

11. Dispositif de pédale selon l'une des revendications précédentes, **caractérisé en ce que** le support de palier (2) présente deux joues (6, 7) espacées l'une de l'autre, entre lesquelles s'étend l'élément de palier (4), qui est fixé ou monté sur les joues (6, 7), le levier de pédale (3) étant disposé entre les joues (6, 7) sur ou sur l'élément de palier (4).

12. Dispositif de pédale selon la revendication 11, **caractérisé en ce que** les logements de palier auxiliaires (21, 22) prévus sur le support de palier (2) sont prévus sur les joues (6, 7) et font saillie de la joue respective (6, 7) respectivement dans la direction des leviers de pédale (3).
